# FASCICULE DE BREVET EUROPEEN

(11) **EP 3 421 771 B1**
(45) Date de publication et mention de la délivrance du brevet: **14.08.2019**
(21) Numéro de dépôt: 18177591.7
(22) Date de dépôt: 13.06.2018
(51) Int. Cl.: F02K 1/72, F02K 1/76

(54) **TURBORÉACTEUR COMPORTANT UNE NACELLE ÉQUIPÉE DE VOLETS INVERSEURS**
TURBOTRIEBWERK, DAS EINE MIT SCHUBUMKEHRKLAPPEN AUSGESTATTETE GONDEL UMFASST
TURBO ENGINE COMPRISING A NACELLE WITH THRUST REVERSER FLAPS

(30) Priorité: 29.06.2017 FR 1756037
(43) Date de publication de la demande: 02.01.2019
(73) Titulaire: Airbus Operations S.A.S., 31060 Toulouse (FR)
(72) Inventeur: RIDRAY, Frédéric, 32600 L'ISLE JOURDAIN (FR); CZAPLA, Lionel, 31700 CORNEBARRIEU (FR); PIARD, Frédéric, 31170 TOURNEFEUILLE (FR); PAUTIS, Olivier, 31330 MERVILLE (FR); TIZAC, Laurent, 31840 SEILH (FR)
(74) Mandataire: Gicquel, Olivier Yves Gérard

(56) Documents cités:
- EP-A1- 3 181 882
- US-A- 3 511 055
- US-A- 3 600 894
- US-A1- 2001 010 148

## Description

### DOMAINE TECHNIQUE

La présente invention concerne un turboréacteur double flux qui comporte une nacelle équipée de volets inverseurs, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte une pluralité de volets inverseurs, chacun étant mobile entre une position fermée dans laquelle il vient en continuité avec la surface extérieure de la nacelle et une position ouverte dans laquelle il ouvre une fenêtre dans la paroi de la nacelle pour expulser l'air du flux secondaire vers l'extérieur.

Le volet inverseur est monté mobile en rotation sur la structure de la nacelle de manière à passer d'une position fermée où le volet inverseur n'obture pas la veine du flux secondaire à une position ouverte où le volet inverseur obture la veine.

Ainsi, en position ouverte, le volet inverseur détourne une partie du flux secondaire vers l'extérieur par la fenêtre.

Le déplacement de chaque volet inverseur est commandé par un ou plusieurs actionneurs qui sont relativement lourds.

Bien que le mécanisme d'un tel volet inverseur donne entière satisfaction, il est souhaitable de trouver des mécanismes différents.

Document EP 3 181 882 A1 divulgue un turboréacteur de l'art antérieur.

### EXPOSE DE L'INVENTION

Un objet de la présente invention est de proposer un turboréacteur double flux qui comporte une nacelle équipée de volets inverseurs avec un mécanisme d'ouverture différent.

A cet effet, est proposé un turboréacteur double flux comportant un moteur et une nacelle entourant le moteur qui comporte un carter de soufflante et un noyau disposé à l'intérieur du carter de soufflante, où une veine d'un flux secondaire est délimitée entre le noyau et le carter de soufflante, ladite nacelle comportant :
- une structure fixe,
- un capot de soufflante monté fixe sur la structure fixe et un ensemble mobile comprenant un capot mobile et étant mobile en translation par rapport à la structure fixe selon une direction de translation entre une position avancée dans laquelle le capot mobile est rapproché du capot de soufflante et une position reculée dans laquelle le capot mobile est éloigné du capot de soufflante vers l'arrière,
- une fenêtre délimitée en amont par le capot de soufflante et en aval par le capot mobile, ladite fenêtre étant ouverte, en position reculée, entre la veine et l'extérieur de la nacelle,
- un volet inverseur monté sur l'ensemble mobile basculant entre une position fermée dans laquelle il obture la fenêtre et une position ouverte dans laquelle il n'obture pas la fenêtre, et
- un mécanisme d'entraînement prévu pour coordonner et différer le passage de la position fermée à la position ouverte du volet inverseur avec le passage de la position avancée à la position reculée du capot mobile et inversement, ledit mécanisme d'entraînement étant prévu pour réaliser une première combinaison assurant, à partir de la position fermée et de la position avancée :
- une translation vers l'arrière de l'ensemble mobile selon la direction de translation pour déplacer l'ensemble mobile de la position avancée à la position reculée en passant par une position intermédiaire, et
- à partir du moment où l'ensemble mobile passe par la position intermédiaire, un basculement du volet inverseur pour déplacer le volet inverseur de la position fermée à la position ouverte, et
le mécanisme d'entraînement étant également prévu pour réaliser une deuxième combinaison assurant, à partir de la position ouverte et de la position reculée :
- une translation vers l'avant de l'ensemble mobile selon la direction de translation pour déplacer l'ensemble mobile de la position reculée à la position avancée en passant par la position intermédiaire, et
- jusqu'au moment où l'ensemble mobile passe par la position intermédiaire, un basculement en sens inverse du volet inverseur pour déplacer le volet inverseur de la position ouverte à la position fermée,
le mécanisme d'entraînement comportant :
- un bras de levier présentant une extrémité avant et une extrémité arrière, où l'extrémité avant est montée mobile en rotation sur l'ensemble mobile et où le bras de levier présente entre l'extrémité avant et l'extrémité arrière, au moins un galet mobile en rotation,
- une bielle présentant une première extrémité et une deuxième extrémité et où la première extrémité est montée mobile en rotation sur le volet inverseur et où la deuxième extrémité est montée mobile en rotation sur l'extrémité arrière du bras de levier, et
- pour chaque galet, une rainure fixée à la structure fixe et dans laquelle est reçu ledit galet, ladite rainure présentant une partie avant parallèle à la direction de translation et une partie arrière s'étendant à la suite de la partie avant et orientée vers l'intérieur en progressant de l'avant vers l'arrière, la jonction entre la première partie et la deuxième partie prenant la forme d'un virage et
   où la position du galet au niveau de ce virage correspond à la position intermédiaire.

Un tel turboréacteur assure un meilleur guidage des volets inverseurs.

Avantageusement, le turboréacteur double flux comporte deux galets alignés de part et d'autre du bras de levier et deux rainures de mêmes formes et parallèles entre elles, chacune recevant un galet.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur selon l'invention,
la Fig. 2 est une vue en perspective du turboréacteur selon l'invention,
les Figs. 3 à 6 sont des vues de côté et en coupe par un plan médian d'une partie du turboréacteur selon l'invention dans différentes positions, et
la Fig. 7 est une vue en perspective d'un détail d'un mécanisme d'entraînement selon l'invention.

### EXPOSE DETAILLE DE MODES DE REALISATION

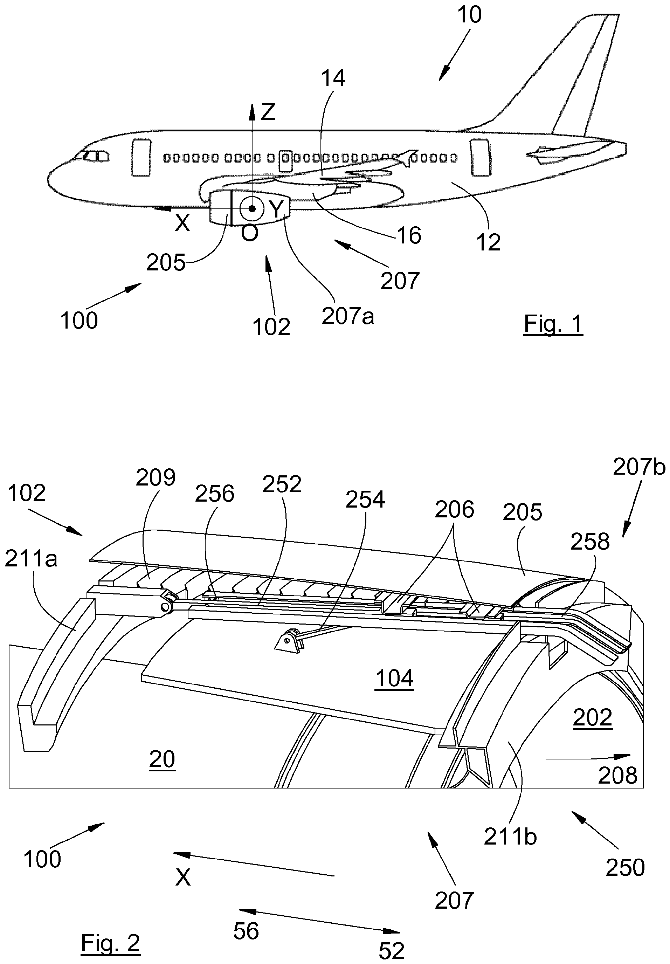

Dans la description qui suit, les termes relatifs à une position sont pris en référence à un aéronef en position d'avancement comme il est représenté sur la Fig. 1. En particulier, les positions avant et arrière sont prises en référence au sens d'avancement normal de l'aéronef.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

La Fig. 2 montre une partie du turboréacteur double flux 100 qui présente une nacelle 102 et un moteur qui est logé à l'intérieur de la nacelle 102 et qui comporte un carter de soufflante 20 et un noyau disposé à l'intérieur du carter de soufflante 20.

Dans la description qui suit, et par convention, on appelle X l'axe longitudinal du turboréacteur double flux 100 qui est parallèle à l'axe longitudinal de l'aéronef 10 ou axe de roulis, orienté positivement dans le sens d'avancement de l'aéronef 10, on appelle Y l'axe transversal qui est parallèle à l'axe de tangage de l'aéronef qui est horizontal lorsque l'aéronef est au sol, et Z l'axe vertical qui est parallèle à l'axe de lacet lorsque l'aéronef est au sol, ces trois directions X, Y et Z étant orthogonales entre elles et formant un repère orthonormé ayant pour origine le centre de gravité du turboréacteur double flux 100.

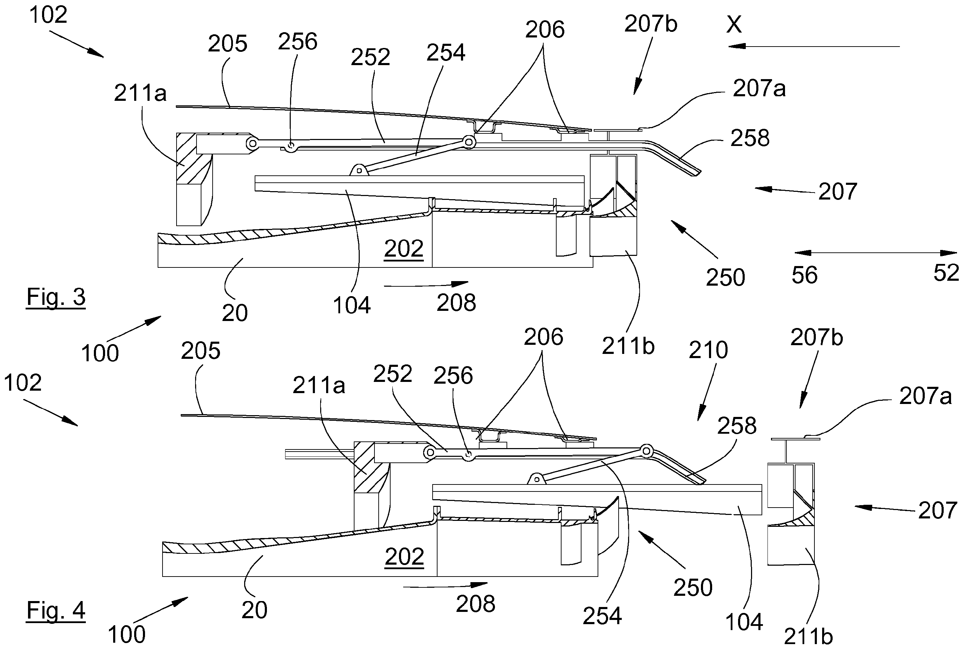

Les Figs. 3 à 6 montrent une partie de la nacelle 102.

Comme le montrent les Figs. 2 à 6, le turboréacteur double flux 100 présente entre le noyau et le carter de soufflante 20, une veine 202 dans laquelle circule le flux secondaire 208 provenant de l'entrée d'air à travers la soufflante.

La nacelle 102 présente une structure fixe 206 qui comprend ici entre autres deux couronnes qui sont fixées par exemple à 12h et 6h et qui porte un capot de soufflante 205 qui est fixe.

La nacelle 102 présente un ensemble mobile 207 qui intègre ici des cascades 209 permettant la redirection du flux passant de l'intérieur vers l'extérieur et présente un châssis coulissant 207b et un capot mobile 207a solidaire du châssis coulissant 207b et formant les parois extérieures de la nacelle 102. Bien sûr, il est également possible de prévoir que les cascades soient absentes.

Le châssis coulissant 207b est ajouré et prend ici la forme d'une couronne avant 211a et d'une couronne arrière 211b solidaires. L'ensemble mobile 207, c'est-à-dire le capot mobile 207a et le châssis coulissant 207b, sont mobiles en translation selon une direction de translation globalement parallèle à l'axe longitudinal X.

La translation de l'ensemble mobile 207 est réalisée par exemple par des systèmes de glissières entre la structure fixe 206 et le châssis coulissant 207b.

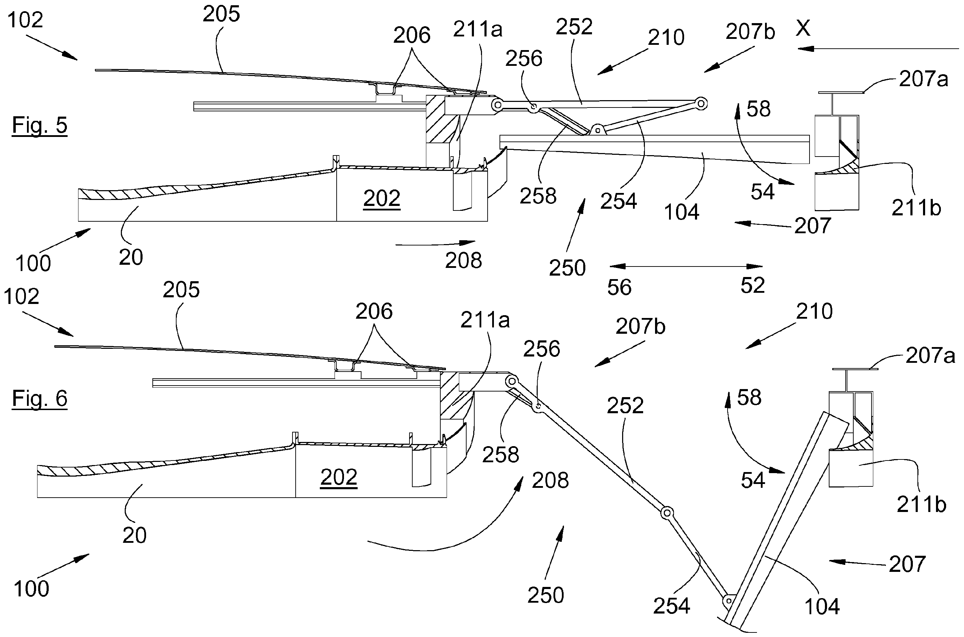

L'ensemble mobile 207 est mobile entre une position avancée (Figs. 2 et 3) et une position reculée (Fig. 6) et inversement, les Figs. 4 et 5 montrant des positions intermédiaires entre la position avancée et la position reculée. En position avancée, l'ensemble mobile 207 est positionné le plus en avant possible de manière à ce que le capot mobile 207a soit rapproché du capot de soufflante 205 afin de former une continuité aérodynamique. En position reculée, l'ensemble mobile 207 est positionné le plus en arrière possible de manière à ce que le capot mobile 207a soit éloigné du capot de soufflante 205 pour dégager une fenêtre 210.

La nacelle 102 comporte également un système d'actionnement assurant le déplacement en translation de l'ensemble mobile 207 de la position avancée à la position reculée et inversement. Le système d'actionnement comprend par exemple un ou des moteurs ou un ou des vérins, où chacun est commandé par une unité de contrôle, par exemple du type processeur, qui commande les déplacements dans un sens ou dans l'autre selon les besoins de l'aéronef 10. Par exemple, dans le cas d'un système d'actionnement comportant des vérins, chacun est monté par exemple entre le châssis coulissant 207b et la structure fixe de la nacelle 102.

En position avancée, le châssis coulissant 207b, plus particulièrement la couronne arrière 211b, et le carter de soufflante 20 se prolongent de manière à définir la surface extérieure de la veine 202.

En position reculée, le châssis coulissant 207b et le carter de soufflante 20 sont à distance et définissent entre eux la fenêtre 210 qui est ouverte entre la veine 202 et l'extérieur de la nacelle 102 ici à travers les cascades 209. C'est-à-dire que l'air provenant du flux secondaire 208 traverse la fenêtre 210 en traversant les cascades 209 pour rejoindre l'extérieur du turboréacteur double flux 100.

En position reculée, le carter de soufflante 20 et le capot de soufflante 205 délimitent la fenêtre 210 en amont par rapport à l'axe longitudinal X et le capot mobile 207a et ici la couronne arrière 211b délimitent la fenêtre 210 en aval par rapport à l'axe longitudinal X. La fenêtre 210 se trouve en regard des cascades 209.

Le châssis coulissant 207b porte des volets inverseurs 104 répartis sur la périphérie de la nacelle 102 en fonction de l'ouverture angulaire de la fenêtre 210 autour de l'axe longitudinal X. Chaque volet inverseur 104 s'étend ici entre la couronne avant 211a et la couronne arrière 211b, et chacun est monté articulé entre une position fermée (Figs. 2 à 5) et une position ouverte (Fig. 5) et inversement.

La position fermée peut être adoptée lorsque le châssis coulissant 207b est en position avancée ou en position reculée. La position ouverte ne peut être adoptée que lorsque le châssis coulissant 207b est en position reculée.

En position fermée, chaque volet inverseur 104 obture une zone de la partie ajourée du châssis coulissant 207b lorsque ce dernier est en position avancée et la même zone de la partie ajourée du châssis coulissant 207b et une zone de la fenêtre 210 lorsque le châssis coulissant 207b est en position reculée. En position ouverte, le volet inverseur 104 n'obture ni ladite zone de la fenêtre 210 ni la partie ajourée du châssis coulissant 207b permettant le passage du flux secondaire 208.

Ainsi, en position fermée, chaque volet inverseur 104 est globalement dans un plan parallèle à l'axe X et en position ouverte, chaque volet inverseur 104 se positionne globalement dans un plan perpendiculaire à l'axe X, en travers de la veine 202 et dévie au moins une partie du flux secondaire 208 vers l'extérieur à travers la fenêtre 210.

En position avancée, chaque volet inverseur 104 se positionne à l'extérieur du carter de soufflante 20.

Chaque volet inverseur 104 est articulé à la partie aval du châssis coulissant 207b, par exemple, sur des charnières fixées au châssis coulissant 207b, et ici plus particulièrement à la couronne arrière 211b, tandis que le bord libre opposé se positionne vers l'amont en position fermée et vers le moteur en position ouverte. Chaque volet inverseur 104 est ainsi monté sur l'ensemble mobile 207 basculant autour d'un axe de basculement qui est globalement tangentiel par rapport à la forme cylindrique de la nacelle 102.

Le passage de la position fermée à la position ouverte du volet inverseur 104 est coordonné mais différé par rapport au passage de la position avancée à la position reculée de l'ensemble mobile 207 et inversement. Lors du passage de la position fermée à la position ouverte, le basculement du volet inverseur 104 commence lorsque l'ensemble mobile 207 passe par une position intermédiaire (Fig. 5) entre la position avancée et la position reculée. A l'inverse, lors du passage de la position ouverte à la position fermée, le basculement du volet inverseur 104 s'arrête lorsque l'ensemble mobile 207 passe par la position intermédiaire en revenant de la position reculée vers la position avancée.

Cette coordination est assurée par un mécanisme d'entraînement 250 qui réalise, à partir de la position fermée et de la position avancée, une première combinaison assurant :
- une translation vers l'arrière (flèche 52) de l'ensemble mobile 207 selon la direction de translation de la position avancée vers la position reculée en passant par la position intermédiaire, et,
- à partir du moment où l'ensemble mobile 207 passe par la position intermédiaire, un basculement (flèche 54) du volet inverseur 104 qui assure le déplacement du volet inverseur 104 de la position fermée à la position ouverte.

Comme cela est expliqué, la translation vers l'arrière de l'ensemble mobile 207 se poursuit durant le basculement du volet inverseur 104.

A l'inverse, le passage de la position ouverte à la position fermée du volet inverseur 104 est assuré par le même mécanisme d'entraînement 250 qui est également prévu pour réaliser une deuxième combinaison assurant à partir de la position ouverte et de la position reculée :
- une translation vers l'avant (flèche 56) de l'ensemble mobile 207 selon la direction de translation de la position reculée à la position avancée en passant par la position intermédiaire, et
- jusqu'au moment où l'ensemble mobile 207 passe par la position intermédiaire, un basculement (flèche 58) en sens inverse du volet inverseur 104 qui assure le retour du volet inverseur 104 de la position ouverte à la position fermée.

Comme cela est expliqué, la translation vers l'avant de l'ensemble mobile 207 débute en même temps que le basculement du volet inverseur 104, puis le basculement du volet inverseur 104 s'arrête tandis que la translation de l'ensemble mobile 207 se poursuit. Ainsi, l'ensemble mobile 207 et le volet inverseur 104 se déplacent d'abord simultanément, puis à partir d'un certain moment, le volet inverseur 104 s'arrête et l'ensemble mobile 207 se déplace seul.

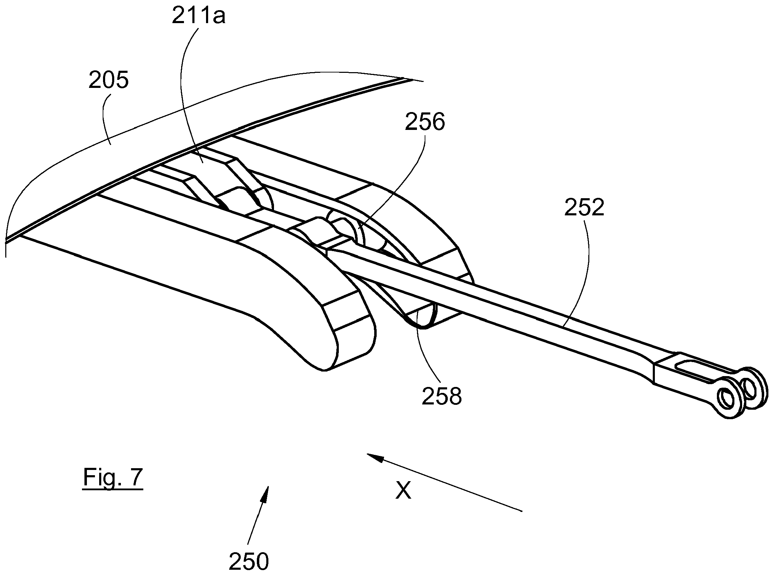

La Fig. 7 montre un détail du mécanisme d'entraînement 250.

Le mécanisme d'entraînement 250 comprend, pour chaque volet inverseur 104 :
- un bras de levier 252 présentant une extrémité avant et une extrémité arrière, où l'extrémité avant est montée mobile en rotation sur l'ensemble mobile 207, plus particulièrement ici sur la couronne avant 211a, et où le bras de levier 252 présente entre l'extrémité avant et l'extrémité arrière, au moins un galet 256 monté mobile en rotation autour d'un axe de roulement,
- une bielle 254 présentant une première extrémité et une deuxième extrémité et où la première extrémité est montée mobile en rotation sur le volet inverseur 104 et où la deuxième extrémité est montée mobile en rotation sur l'extrémité arrière du bras de levier 252, et
- pour chaque galet 256, une rainure 258 fixée à la structure fixe 206 et dans laquelle est reçu ledit galet 256, ladite rainure 258 présentant une partie avant parallèle à la direction de translation et une partie arrière s'étendant à la suite de la partie avant et orientée vers l'intérieur en progressant de l'avant vers l'arrière.

Dans le mode de réalisation de l'invention présenté ici, en position fermée, la première extrémité de la bielle 254 est en avant par rapport à la deuxième extrémité de manière à former un Z pouvant se déployer lors du passage en position ouverte.

La jonction entre la première partie et la deuxième partie prend la forme d'un virage et la position du galet 256 au niveau de ce virage correspond à la position intermédiaire.

Le fonctionnement du mécanisme d'entraînement 250 est alors le suivant à partir de la position fermée et de la position avancée :
- l'ensemble mobile 207 et le mécanisme d'entraînement 250 se déplacent en translation (52) vers l'arrière (Fig. 3), le galet 256 étant dans la première partie de la rainure 258 et étant guidé par elle (Fig. 4) en translation jusqu'au virage,
- lorsque l'ensemble mobile 207 passe par la position intermédiaire, le galet 256 atteint le virage et passe dans la deuxième partie de la rainure 258 (Fig. 5),
- la poursuite du déplacement en translation vers l'arrière de l'ensemble mobile 207 et de l'extrémité avant du bras de levier 252, ainsi que le positionnement du galet 256 guidé par la deuxième partie de la rainure 258 tendent à déplier le bras de levier 252 et la bielle 254 pour déplacer le volet 104 (54) vers sa position ouverte (Fig. 6).

A l'inverse, le fonctionnement du mécanisme d'entraînement 250 est le suivant à partir de la position ouverte et de la position reculée :
- l'ensemble mobile 207 et l'extrémité avant du bras de levier 252 se déplacent en translation (56) vers l'avant (Fig. 6) et tant que le galet 256 est guidé par la deuxième partie de la rainure 258, le bras de levier 252 et la bielle 254 se replient pour déplacer le volet 104 (56) vers sa position fermée,
- lorsque l'ensemble mobile 207 passe par la position intermédiaire, le volet 104 est en position fermée et le galet 256 atteint le virage et passe dans la première partie de la rainure 258 (Fig. 5),
- le déplacement en translation vers l'avant de l'ensemble mobile 207 et du mécanisme d'entraînement 250 se poursuit alors jusqu'à la position avancée (Fig. 3) où le galet 256 est guidé par la première partie de la rainure 258 (Fig. 4).

Les axes de rotation du bras de levier 252 et de la bielle 254 ainsi que les axes de roulements relatifs à un même volet inverseur 104, sont parallèles entre eux et globalement parallèles à l'axe de basculement du volet inverseur 104.

Dans le mode de réalisation de l'invention présenté sur les Figs. 2 à 7, il y a deux galets 256 qui sont alignés de part et d'autre du bras de levier 252 et par conséquent il y a également deux rainures 258 de mêmes formes et parallèles entre elles, chacune recevant un galet 256.

L'invention a été plus particulièrement décrite dans le cas d'une nacelle sous une aile mais elle peut s'appliquer à une nacelle située à l'arrière du fuselage.

## Revendications

1. Turboréacteur double flux (100) comportant un moteur et une nacelle (102) entourant le moteur qui comporte un carter de soufflante (20) et un noyau disposé à l'intérieur du carter de soufflante (20), où une veine (202) d'un flux secondaire (208) est délimitée entre le noyau et le carter de soufflante (20), ladite nacelle (102) comportant :
- une structure fixe (206),
- un capot de soufflante (205) monté fixe sur la structure fixe (206) et un ensemble mobile (207) comprenant un capot mobile (207a) et étant mobile en translation par rapport à la structure fixe (206) selon une direction de translation entre une position avancée dans laquelle le capot mobile (207a) est rapproché du capot de soufflante (205) et une position reculée dans laquelle le capot mobile (207a) est éloigné du capot de soufflante (205) vers l'arrière,
- une fenêtre (210) délimitée en amont par le capot de soufflante (205) et en aval par le capot mobile (207a), ladite fenêtre (210) étant ouverte, en position reculée, entre la veine (202) et l'extérieur de la nacelle (102),
- un volet inverseur (104) monté sur l'ensemble mobile (207) basculant entre une position fermée dans laquelle il obture la fenêtre (210) et une position ouverte dans laquelle il n'obture pas la fenêtre (210), et
- un mécanisme d'entraînement (250) prévu pour coordonner et différer le passage de la position fermée à la position ouverte du volet inverseur (104) avec le passage de la position avancée à la position reculée du capot mobile (207) et inversement, ledit mécanisme d'entraînement (250) étant prévu pour réaliser une première combinaison assurant, à partir de la position fermée et de la position avancée :
- une translation vers l'arrière (52) de l'ensemble mobile (207) selon la direction de translation pour déplacer l'ensemble mobile (207) de la position avancée à la position reculée en passant par une position intermédiaire, et
- à partir du moment où l'ensemble mobile (207) passe par la position intermédiaire, un basculement (54) du volet inverseur (104) pour déplacer le volet inverseur (104) de la position fermée à la position ouverte, et
le mécanisme d'entraînement (250) étant également prévu pour réaliser une deuxième combinaison assurant, à partir de la position ouverte et de la position reculée :
- une translation vers l'avant (56) de l'ensemble mobile (207) selon la direction de translation pour déplacer l'ensemble mobile (207) de la position reculée à la position avancée en passant par la position intermédiaire, et
- jusqu'au moment où l'ensemble mobile (207) passe par la position intermédiaire, un basculement (58) en sens inverse du volet inverseur (104) pour déplacer le volet inverseur (104) de la position ouverte à la position fermée,
le mécanisme d'entraînement (250) comportant :
- un bras de levier (252) présentant une extrémité avant et une extrémité arrière, où l'extrémité avant est montée mobile en rotation sur l'ensemble mobile (207) et où le bras de levier (252) présente entre l'extrémité avant et l'extrémité arrière, au moins un galet (256) mobile en rotation,
- une bielle (254) présentant une première extrémité et une deuxième extrémité et où la première extrémité est montée mobile en rotation sur le volet inverseur (104) et où la deuxième extrémité est montée mobile en rotation sur l'extrémité arrière du bras de levier (252), et
- pour chaque galet (256), une rainure (258) fixée à la structure fixe (206) et dans laquelle est reçu ledit galet (256), ladite rainure (258) présentant une partie avant parallèle à la direction de translation et une partie arrière s'étendant à la suite de la partie avant et orientée vers l'intérieur en progressant de l'avant vers l'arrière, la jonction entre la première partie et la deuxième partie prenant la forme d'un virage et
où la position du galet (256) au niveau de ce virage correspond à la position intermédiaire.

2. Turboréacteur double flux (100) selon la revendication 1, **caractérisé en ce qu'**il comporte deux galets (256) alignés de part et d'autre du bras de levier (252) et **en ce qu'**il présente deux rainures (258) de mêmes formes et parallèles entre elles, chacune recevant un galet (256).

3. Aéronef (10) comportant au moins un turboréacteur double flux (100) selon l'une des revendications 1 ou 2.

## Patentansprüche

1. Zweistrom-Turbotriebwerk (100), umfassend einen Motor und eine Gondel (102), die den Motor umgibt, der ein Bläsergehäuse (20) und einen Kern, der innerhalb des Bläsergehäuses (20) angeordnet ist, aufweist, wo ein Kanal (202) eines Sekundärstroms (208) zwischen dem Kern und dem Bläsergehäuse (20) begrenzt ist, wobei die Gondel (102) Folgendes aufweist:
- eine feste Struktur (206),
- eine Bläserverkleidung (205), die an der festen Struktur (206) fest angebracht ist, und eine bewegliche Anordnung (207), die eine bewegliche Verkleidung (207a) umfasst und bezogen auf die feste Struktur (206) entlang einer Translationsrichtung zwischen einer vorgerückten Position, in der die bewegliche Verkleidung (207a) der Bläserverkleidung (205) angenähert ist, und einer zurückgezogenen Position, in der die bewegliche Verkleidung (207a) von der Bläserverkleidung (205) nach hinten entfernt ist, translatorisch beweglich ist,
- ein Fenster (210), das stromauf von der Bläserverkleidung (205) und stromab von der beweglichen Verkleidung (207a) begrenzt ist, wobei das Fenster (210) in der zurückgezogenen Position zwischen dem Kanal (202) und dem Äußeren der Gondel (102) offen ist,
- eine Schubumkehrklappe (104), die an der beweglichen Anordnung (207) angebracht ist, die zwischen einer geschlossenen Position, in der sie das Fenster (210) verschließt, und einer offenen Position, in der sie das Fenster (210) nicht verschließt, klappt, und
- einen Antriebsmechanismus (250), der dafür vorgesehen ist, den Wechsel aus der geschlossenen Position in die offene Position der Schubumkehrklappe (104) mit dem Wechsel aus der vorgerückten Position in die zurückgezogene Position der beweglichen Verkleidung (207) und umgekehrt zu koordinieren und zu verschieben,
wobei der Antriebsmechanismus (250) dafür vorgesehen ist, eine erste Kombination auszuführen, die ausgehend von der geschlossenen Position und der vorgerückten Position Folgendes sicherstellt:
- eine Translation zum hinteren Teil (52) der beweglichen Anordnung (207) entlang der Translationsrichtung, um die bewegliche Anordnung (207) aus der vorgerückten Position über eine Zwischenposition in die zurückgezogene Position zu bewegen, und
- ab dem Zeitpunkt, an dem die bewegliche Anordnung (207) die Zwischenposition passiert, ein Klappen (54) der Schubumkehrklappe (104), um die Schubumkehrklappe (104) aus der geschlossenen Position in die offene Position zu bewegen, und
wobei der Antriebsmechanismus (250) ebenfalls dafür vorgesehen ist, eine zweite Kombination auszuführen, die ausgehend von der offenen Position und der zurückgezogenen Position Folgendes sicherstellt:
- eine Translation zum vorderen Teil (56) der beweglichen Anordnung (207) entlang der Translationsrichtung, um die bewegliche Anordnung (207) aus der zurückgezogenen Position über die Zwischenposition in die vorgerückte Position zu bewegen, und
- bis zu dem Zeitpunkt, zu dem die bewegliche Anordnung (207) die Zwischenposition passiert, ein Klappen (58) der Schubumkehrklappe (104) in die umgekehrte Richtung, um die Schubumkehrklappe (104) aus der offenen Position in die geschlossene Position zu bewegen,
der Antriebsmechanismus (250) aufweisend:
- einen Hebelarm (252), der ein vorderes Ende und ein hinteres Ende aufweist, wobei das vordere Ende drehbeweglich auf der beweglichen Anordnung (207) angebracht ist, und wobei der Hebelarm (252) zwischen dem vorderen Ende und dem hinteren Ende mindestens eine drehbewegliche Rolle (256) aufweist,
- eine Verbindungsstange (254), die ein erstes Ende und ein zweites Ende aufweist, und wobei das erste Ende auf der Schubumkehrklappe (104) drehbeweglich angebracht ist, und wobei das zweite Ende auf dem hinteren Ende des Hebelarms (252) drehbeweglich angebracht ist, und
- für jede Rolle (256) eine Rille (258), die an der festen Struktur (206) angebracht ist, und in der die Rolle (256) aufgenommen ist, wobei die Rille (258) einen vorderen Abschnitt, der parallel zu der Translationsrichtung verläuft, und einen hinteren Abschnitt, der sich in der Folge des vorderen Bereichs erstreckt und von vorne nach hinten fortschreitend zum Inneren gerichtet ist, aufweist, wobei die Verbindung zwischen dem ersten Abschnitt und dem zweiten Abschnitt die Form einer Kurve annimmt und
wobei die Position der Rolle (256) an dieser Kurve der Zwischenposition entspricht.

2. Zweistrom-Turbotriebwerk (100) nach Anspruch 1, **dadurch gekennzeichnet, dass** es zwei Rollen (256) umfasst, die beiderseits des Hebelarms (252) ausgerichtet sind, und dadurch, dass es zwei Rillen (258) aufweist, die gleichförmig und parallel zueinander sind, wobei jede eine Rolle (256) aufnimmt.

3. Luftfahrzeug (10), umfassend mindestens ein Zweistrom-Turbotriebwerk (100) nach einem der Ansprüche 1 oder 2.

## Claims

1. Turbofan (100) comprising an engine and a nacelle (102) surrounding the engine which comprises a fan casing (20) and a core arranged inside the fan casing (20), in which a duct (202) for a bypass flow (208) is defined between the core and the fan casing (20), said nacelle (102) comprising:
- a fixed structure (206),
- a fan cowl (205) fixedly mounted on the fixed structure (206) and a mobile assembly (207) comprising a mobile cowl (207a) and being translatable with respect to the fixed structure (206) in a translation direction between an advanced position in which the mobile cowl (207a) is brought closer to the fan cowl (205) and a pushed-back position in which the mobile cowl (207a) is moved away from the fan cowl (205) toward the rear,
- a window (210) defined upstream by the fan cowl (205) and downstream by the mobile cowl (207a), said window (210) being open, in the pushed-back position, between the duct (202) and the outside of the nacelle (102) ,
- a reverser flap (104) mounted on the mobile assembly (207) tilting between a closed position in which it obstructs the window (210) and an open position in which it does not obstruct the window (210), and
- an impelling mechanism (250) provided to coordinate and delay the passage of the reverser flap (104) from the closed position to the open position with respect to the passage of the mobile cowl (207) from the advanced position to the pushed-back position and vice versa, said impelling mechanism (250) being provided to produce a first combination providing, from the closed position and from the advanced position:
- a rearward (52) translation of the mobile assembly (207) in the translation direction in order to move the mobile assembly (207) from the advanced position to the pushed-back position by passing via an intermediate position, and
- from the moment that the mobile assembly (207) passes via the intermediate position, tilting (54) of the reverser flap (104) in order to move the reverser flap (104) from the closed position to the open position, and
the impelling mechanism (250) also being provided to produce a second combination providing, from the open position and from the pushed-back position:
- a forward (56) translation of the mobile assembly (207) in the translation direction in order to move the mobile assembly (207) from the pushed-back position to the advanced position by passing via the intermediate position, and
- up to the moment that the mobile assembly (207) passes via the intermediate position, tilting (58) of the reverser flap (104) in the reverse direction in order to move the reverser flap (104) from the open position to the closed position,
the impelling mechanism (250) comprising:
- a lever arm (252) having a front end and a rear end, wherein the front end is mounted rotatably on the mobile assembly (207) and wherein the lever arm (252) has, between the front end and the rear end, at least one rotatable roller (256),
- a connecting rod (254) having a first end and a second end and wherein the first end is mounted rotatably on the reverser flap (104) and wherein the second end is mounted rotatably on the rear end of the lever arm (252), and
- for each roller (256), a channel (258) fixed to the fixed structure (206) and in which said roller (256) is received, said channel (258) having a front part parallel with the translation direction and a rear part extending after the front part and oriented inward as it progresses from the front toward the rear, the junction between the first part and the second part taking the form of a bend and
wherein the position of the roller (256) at this bend corresponds to the intermediate position.

2. Turbofan (100) according to Claim 1, **characterized in that** it comprises two rollers (256) aligned on either side of the lever arm (252) and **in that** it has two channels (258) with the same shapes and parallel with one another, each receiving a roller (256).

3. Aircraft (10) comprising at least one turbofan (100) according to either of Claims 1 and 2.
